# EUROPÄISCHE PATENTSCHRIFT

(11) **EP 0 625 443 B1**
(45) Veröffentlichungstag und Bekanntmachung des Hinweises auf die Patenterteilung: **23.10.1996**
(21) Anmeldenummer: 94107555.8
(22) Anmeldetag: 16.05.1994
(51) Int. Cl.: B60N 2/28, B60N 3/00

(54) **Kombinierter Trägebehälter und Sitz**
Combined carrying case and seat
Conteneur portatif et siège combinés

(30) Priorität: 18.05.1993 DE 9307533 U
(43) Veröffentlichungstag der Anmeldung: 23.11.1994
(73) Patentinhaber: Kleinecke, Michael, D-83324 Ruhpolding (DE)
(72) Erfinder: Kleinecke, Michael, D-83324 Ruhpolding (DE)
(74) Vertreter: Lippert, Hans-Joachim, Dipl.-Ing.

(56) Entgegenhaltungen:
- EP-A- 0 329 136
- US-A- 4 079 992
- US-A- 4 527 830
- PATENT ABSTRACTS OF JAPAN vol. 14, no. 342 (C-0743) 24. Juli 1990 & JP-A-02 124 107 (ECHO SANGYO:KK) 11. Mai 1990

## Beschreibung

Die Erfindung betrifft einen Tragebehälter mit einem Grundkörper, der im Verhältnis zu seiner Breite oder seiner Höhe eine geringere Tiefe aufweist und der mit einem Deckel verschließbar ist, wobei eine Außenfläche des Tragebehälters als Sitzfläche eines Kindersitzes ausgebildet ist (s. zum Beispiel US-A-4 527 830).

Derartige Tragebehälter sind in vielfältiger Art, beispielsweise als Einkaufs- Werkzeug- oder Fahrradtaschen, als Schulranzen aber auch als Flüssigkeitsbehälter, wie Kanister, bekannt.

Nachteilig ist dabei, daß sie zumeist nur dem einen Verwendungszweck, nämlich der Aufbewahrung und dem Tragen der Gegenstände, dienen, für die sie bestimmt sind.

Für Kinder werden sehr häufig besondere Sitzmöglichkeiten benötigt. Sollen sie beispielsweise auf Stühlen Platz nehmen, die auf die Körpergröße von erwachsenen Personen abgestimmt sind, erreichen insbesondere Kleinkinder nicht die erforderliche Sitzhöhe am Tisch. Abhilfe können hier Sitzkissen schaffen. Werden derartige Sitzkissen unterwegs vorsorglich mitgeführt, müssen diese zusätzlich zu Tragebehältern, die zumeist für die Aufbewahrung von Gegenständen für die Kinderversorgung notwendig sind, mit sich geführt werden.

Bei der Benutzung von Kraftwagen zeigt sich eine weitere Notwendigkeit besonderer Sitzmöglichkeiten für Kinder. So ist es beispielsweise in Deutschland sogar Rechtspflicht, daß Kinder bis zu 12 Jahren in Autos nur mitgenommen werden können, wenn für sie ein geeigneter Kindersitz vorgesehen ist.

Für Kinder ab einm Lebensalter von etwa drei Jahren sind hierfür Sitzelemente ausreichend, die die Sitzposition des Kindes auf dem Autositz erhöhen, so daß serienmäßige Sicherheitsgurte ihre Funktion erfüllen können.

Nachteilig ist, daß für mitgenommene Kinder stets ein solches Sitzelement zur Verfügung stehen muß. Sollen beispielsweise mehrere Kinder aus der Schule abgeholt werden, ist dies oft nicht möglich, ohne ein Sicherheitsrisiko einzugehen und gegen die gesetzlichen Bestimmungen zu verstoßen. Um dies zu vermeiden, müßten die Kinder außer ihrem Schulranzen noch einen geeigneten Autokindersitz mit sich nehmen.

In der gattungsbildenden Druckschrift US-A-4 527 830 wird ein Tragebehälter beschrieben, der sowohl zum Transport von Zubehör für Kleinstkinder als auch zum Tragen der Kleinstkinder selbst vorgesehen ist. Dieser Tragebehälter weist einen Grundkörper auf, dessen Seitenwände die Oberseite des Grundkörpers überragen. In diesen Seitenwänden befinden sich Schlitze, in die Nasen eingreifen, welche an zwei Tischteilen angebracht sind, die ihrerseits um die Nasen schwenkbar sind. Innerhalb des Grundkörpers kann dieser Tragebehälter Utensilien für Kleinstkinder aufnehmen. Die schwenkbaren Tischteile können einerseits als Sitz verstellt werden und andererseits beispielsweise als Wickelunterlage dienen.

Der Erfindung liegt somit die Aufgabe zugrunde, Tragebehälter derart auszubilden, daß sie unter Erweiterung ihrer Zweckbestimmungen als Sitzelemente Verwendung finden können.

Gemäß der Erfindung wird diese Aufgabe durch die kennzeichnenden Merkmale des Anspruchs 1 gelöst.

Damit ist es möglich, ein Tragebehältnis, beispielsweise einen Koffer für Kindersachen oder eine Frischhaltebox, zur Erhöhung der Sitzposition einzusetzen. Die Ausgestaltung der Außenfläche als Sitzfläche und die Stabilität verleihen sodann dieser Verwendung die notwendige Sicherheit.

Eine besonders zweckmäßige Ausgestaltung der Erfindung ist darin zu sehen, daß der Tragebehälter auf den Sitz eines Kraftfahrzeuges derart auflegbar ist, daß die als Sitzfläche ausgebildete breite Außenfläche die Sitzfläche eines Autokindersitzes und der Grundkörper den Korpus des Autokindersitzes bildet.

Hierdurch wird es möglich, Tragebehälter, die im Kraftfahrzeug ohnehin meist mitgeführt werden, wie Werkzeugtaschen, Sanitätskoffer o.ä., zusätzlich für eine Funktion als Autokindersitz mit der gleichen Sicherheit vorzusehen, wie sie auch von separaten Kindersitzen geboten wird.

In einer weiteren günstigen Ausgestaltung der Erfindung ist vorgesehen, den Deckel derart auszubilden, daß er im geschlossenen Zustand mit dem Grundkörper einen die Stabilität des Grundkörpers erhöhenden Formschluß bildet.

Da der Deckel bei einem Einsatz als Sitz zumeist geschlossen bleiben soll, kann durch diese Ausgestaltung eine Gewichtsreduzierung erreicht werden, da eine Stabilitätssicherung bei geringerem Materialeinsatz erreicht werden kann.

Es ist sehr vorteilhaft, an der breiten Außenfläche, die der als Sitzfläche ausgebildeten breiten Außenfläche gegenüberliegt, ein erstes Verschlußelement anzuordnen, in das ein zweites Verschlußelement an dem Deckel eingreifbar ist.

Ein derartiger Deckelverschluß ist in herkömmlicher Art und Weise zu handhaben, stellt aber für die Verwendung der Sitzfläche kein Hindernis dar.

Es ist weiterhin zweckmäßig, daß der Deckel mit dem Grundkörper scharnierartig verbunden ist, um somit einen Verlust des Deckels zu vermeiden.

Nicht nur aus ästhetischen Gründen, sondern auch zur Vermeidung einer Verletzungsgefahr, gerade bei einem Einsatz im Kraftfahrzeug, ist vorgesehen, daß der Grundkörper mit einer Hülle überzogen ist.

Es kann sich auch als sehr zweckmäßig erweisen, daß der Grundkörper in eine Hülle einsetzbar ist. Das bietet die Möglichkeit des Wechselns der Hülle, wenn diese beispielsweise verschmutzt ist.

In einer Variante zu einer auswechselbaren Hülle ist vorgesehen, daß die Hülle mit dem Grundkörper verbindbar ist, wobei nur die Hülle die nach außen wirkenden Funktionen des Grundkörpers übernimmt.

Bei einer derartigen Variante kann der Grundkörper jederzeit aus der Hülle herausgenommen werden. Wird beispielsweise eine Werkzeugtasche als Autokindersitz verwendet, so ist es zweckmäßig, den Grundkörper aus der Hülle herauszuziehen, wenn Werkzeug zum Einsatz gebracht werden soll. Damit kann eine Verschmutzung der Hülle von vornherein vermieden werden.

Alle äußeren Funktionen des Tragebehälters, wie der Verschluß des Deckels, die Befestigung von Trägern o.ä., können durch die Hülle übernommen werden, wobei eventuelle Kraftübertragungen durch die Befestigung der Hülle am Grundkörper gewährleistet sind.

In einer günstigen Ausgestaltung der Erfindung sind an der als Sitzfläche ausgestalteten breiten Außenseite Randwülste vorgesehen. Diese erhöhen die Sicherheit beim Sitzen und verbessern den Tragekomfort, wenn das Tragebehältnis auf dem Rücken getragen werden soll.

Eine weitere Erhöhung des Sitz- und gegebenenfalls des Tragekomforts wird dadurch erreicht, daß die als Sitzfläche ausgebildete breite Außenseite gepolstert ist.

Es ist auch möglich, die als Sitzfläche ausgebildete breite Außenfläche mit einer separaten Polsterfläche verbindbar zu gestalten. Dies bietet die Möglichkeit des Wechselns der Polsterfläche. Damit können nicht nur verschmutzte Polsterflächen sehr leicht gereinigt werden, sondern auch verschiedene Polsterstärken zur Anpassung an verschiedene Sitzhöhen eingesetzt werden.

Sehr zweckmäßig ist es, die Polsterfläche so zu gestalten, daß die als Sitzfläche ausgebildete breite Außenfläche mit Klettverschlußflächen versehen ist, die mit korrespondierenden Klettverschlußflächen an der Rückseite der separaten Polsterfläche verbindbar sind. Dadurch wird ein Wechsel mit einem Handgriff ermöglicht.

Insbesondere für die Verwendung von Schulranzen als Kindersitze ist es zweckmäßig, daß an dem Tragebehälter Träger derart angeordnet sind, daß der Tragebehälter auf dem Rücken tragbar ist, wobei die als Sitzfläche ausgebildete Außenfläche am Rücken der tragenden Person anliegt.

In einer günstigen Variante ist dabei vorgesehen, daß sich die Träger aus einem Schulterpolster und einem Tragriemen mit einer daran befestigten Lasche und einem Klemmelement zusammensetzen und Schulterpolster und Tragriemen durch ein Fixierband so miteinander verbunden sind, daß ein schnelles Öffnen und flexibles Einstellen der Träger möglich ist.

Diese Variante eröffnet zwei Möglichkeiten, die insbesondere für den Einsatz als Autokindersitz sehr zweckmäßig sind:

Einerseits können durch die leichte Öffnungsmöglickeit der Träger diese um die Beine des Kindes gelegt und festgezogen werden. Dies bietet dem Kind eine zusätzliche Sicherheit.

In dem Falle, daß das Kind das Auto schnell verlassen muß, kann es einfach den Sicherheitsgurt lösen und das Fahrzeug mit angeschnallten Tragebehälter verlassen.

Andererseits können die Träger um den Sicherheitsgurt gelegt werden. Damit ist der Tragebehälter selbst gegen ein Rutschen gesichert. Somit wird vermieden, daß er durch seine Beschleunigungskraft, die infolge des mitunter recht erheblichen Gewichtes, gerade von Schulranzen, nicht zu vernachlässigen ist, im Falle eines Bremsmanövers unter dem Gesäß des Kindes hervorrutscht und somit die Funktion des Sicherheitsgurtes verhindert.

In einer weiteren Ausgestaltung der Erfindung ist vorgesehen, daß an dem Deckel ein Handgriff einklappbar angelenkt ist. Somit läßt die Erfindung auch die Funktion eines Handtragebehälters offen, ohne daß ein Handgriff eine zusätzliche Verletzungsgefahr darstellt.

Zur Erhöhung der Verkehrssicherheit bei einem Tragebehälter, der als Schulranzen dient, ist vorgesehen, daß auf der der Sitzfläche gegenüberliegenden breiten Außenfläche und/oder an den die Tiefe des Tragebehälters bildenden schmalen Außenseiten reflektierende Flächen angeordnet sind.

Gemäß der Erfindung, und zwar bei der Verwendung des Tragebehälters als Autokindersitz, ist vorgesehen, daß an den die Tiefe des Tragbehälters bildenden schmalen Außenseiten Arme angelenkt sind, die bei der Verwendung als Autokindersitz in Richtung zur Sitzfläche so schwenkbar sind, daß sie aus der Ebene der Sitzfläche herausragen, und die in der Nähe des deckel- oder bodenseitigen Endes der Außenseiten derart angelenkt sind, daß sie sich bei Verwendung als Autokindersitz an der der Rückenlehne des Sitzes des Kraftfahrzeuges zugewandten Seite befinden.

Der Zweck dieser Arme ist darauf gerichtet, ein Rutschen des Kindersitzes infolge der Massenträgheit, wie bereits dargestellt, zu verhindern. Die Arme liegen, durch ihre Anordnung bedingt, in Fahrtrichtung hinter dem zum Sicherheitsgurt gehörenden Beckengurt. Somit verhindert dieser Beckengurt, daß der Tragebehältern bei einer Verzögerung nach vorn rutscht.

In einer Variante hierzu sind die Arme als Bügel ausgebildet, die bei der Verwendung als Autokindersitz den Beckengurt des an dem Sitz des Kraftfahrzeuges vorgesehenen Sicherheitsgurtes umgreifen. In dieser Variante liegt der Beckengurt gleichsam in den Bügeln, wodurch ein Rutschen des Beckengurtes über die Arme hinweg vermieden wird.

Zur Verhinderung der Verletzungsgefahr und aus ästhetischen Gründen ist bei einer Variante der Erfindung vorgesehen, daß an den schmalen Außenseiten Taschen zur Aufnahme der eingeschwenkten Arme bei Verwendung als Tragebehälter vorgesehen sind.

In einer weiteren Ausgestaltung der Erfindung ist an dem Arm ein erstes Zuhaltemittel vorgesehen, das in ein zweites Zuhaltemittel an dem Deckel in der aus der Ebene der Sitzfläche herausragenden Position des Armes, den Deckel arretierend, eingreift.

Dadurch wird verhindert, daß sich der Deckel bei einer Verwendung als Autokindersitz öffnen kann. Insbesondere wird dabei verhindert, daß die Stabilität durch einen sich öffnenden Deckel verringert würde.

Ein weitere Ausgestaltung sieht vor, daß an dem Arm ein drittes Zuhaltemittel vorgesehen ist, das in ein viertes Zuhaltemittel an dem Deckel in der auf die schmale Außenseite eingeschwenkten Position des Armes, den Deckel arretierend, eingreift.

Diese Zuhaltemittel gewährleisten eine Arretierung des Dekkels, wenn er in seine normale Tragfunktion gebracht wird. Dies stellt einen gegebenenfalls vorteilhaften zusätzlichen Verschluß dar.

Bei beiden vorgenannten Varianten ist es möglich, daß das erste und das dritte oder das zweite und das vierte Zuhaltemittel das gleiche Bauelement darstellen. Ist das eine Zuhaltemittel beispielsweise eine Nase, die in eine Öffnung als das andere Zuhaltemittel eingreift, so kann die Öffnung auch gegebenenfalls von dem weiteren Zuhaltemittel genutzt werden.

Besonders günstig kann der Arm dadurch gestaltet werden, daß der Grundkörper an den Drehpunkten mit einem Zapfen oder einer Öffnung versehen ist, auf den oder in die der Arm an seinem Drehpunkt eingeclipst ist.

In einer Ausgestaltung des Armes ist es zweckmäßig, daß der Arm um seinen Drehpunkt herum einen tellerförmigen Bereich aufweist, der das erste und/oder das dritte Zuhaltemittel aufnimmt.

Schließlich ist in einer weiteren Ausgestaltung der Erfindung vorgesehen, daß der Arm in der von dem befestigungsseitigen Ende der schmalen Außenseite wegweisenden Richtung von der durch seinen Drehpunkt laufenden Radiuslinie abgewinkelt ist. Damit wird in ähnlicher Art und Weise wie bei der bügelartigen Ausgestaltung des Armes ein Vorbeigleiten an dem Beckengurt verhindert.

Die Erfindung soll nachfolgend anhand zweier Ausführungsbeispiele näher erläutert werden.

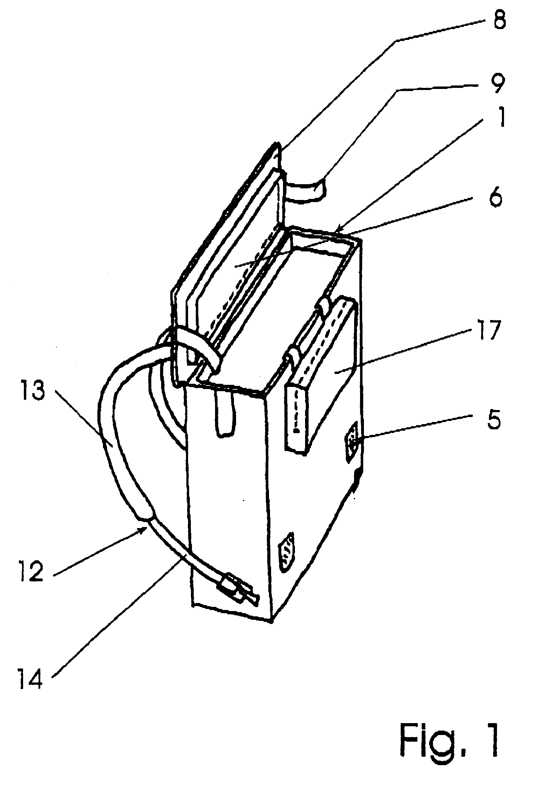

In den zugehörigen Zeichnungen zeigen
- Fig. 1: eine erste Ausführung eines erfindungsgemäßen Tragebehälters in aufgestellter Position,

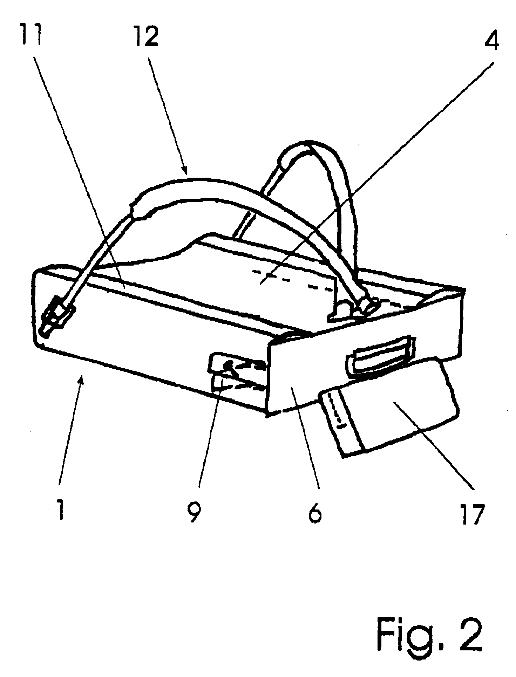

- Fig. 2: die erste Ausführung eines erfindungsgemäßen Tragebehälters in liegender Position,

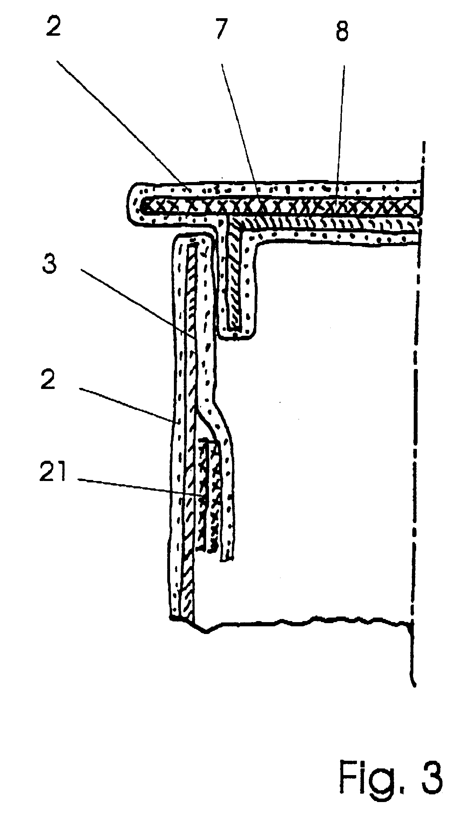

- Fig. 3: einen Teilschnitt des Deckels des erfindungsgemäßen Tragebehälters,

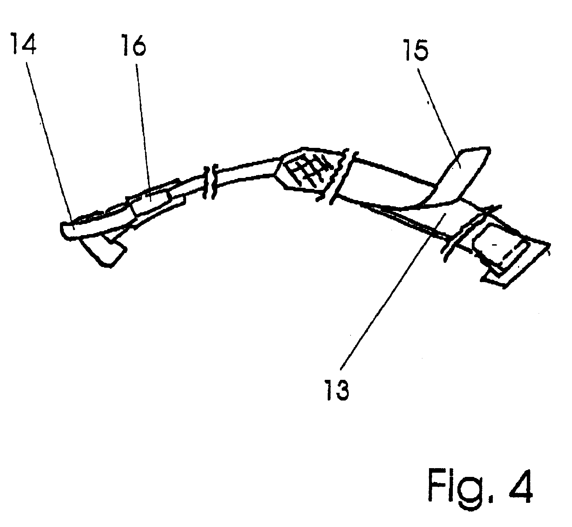

- Fig. 4: Einzelheiten des Tragriemens des erfindungsgemäßen Tragebehälters,

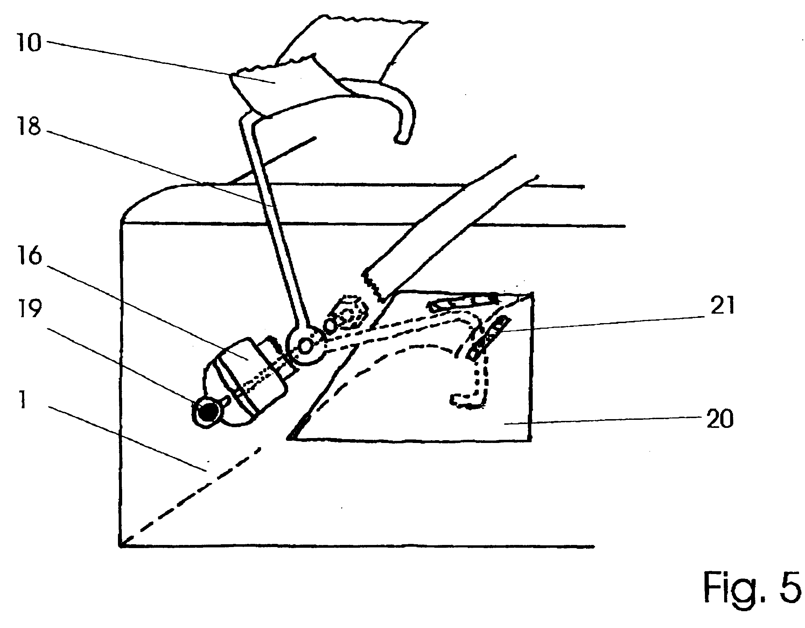

- Fig. 5: Einzelheiten der als Bügel ausgebildeten schwenkbaren Arme des erfindungsgemäßen Tragebehälters,

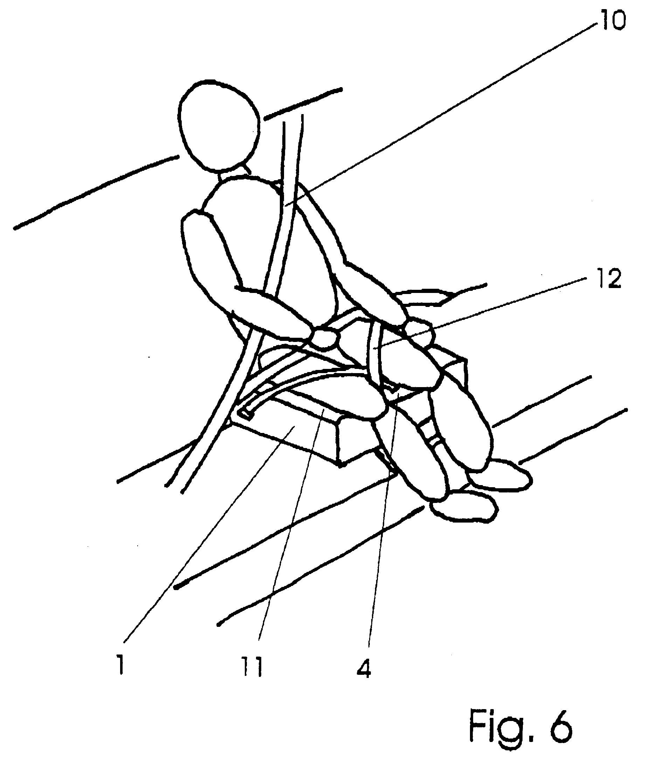

- Fig. 6: eine schematische Darstellung der Verwendung des erfindungsgemäßen Tragebehälters als Autokindersitz,

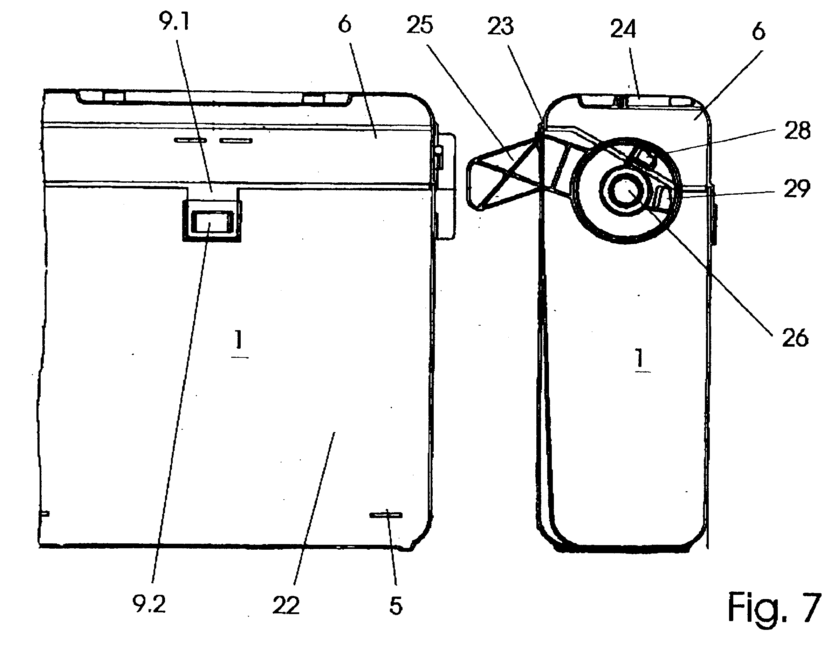

- Fig. 7: eine Vorderansicht und eine Seitenansicht einer zweiten Ausführung eines erfindungsgemäßen Tragebehälters,

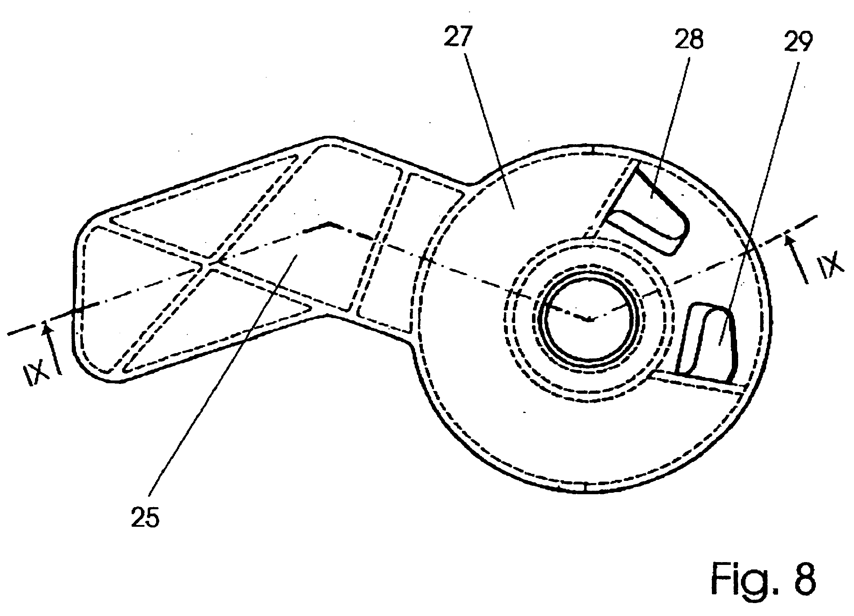

- Fig. 8: eine Draufsicht auf einen Arm eines erfindungsgemäßen Tragebehälters,

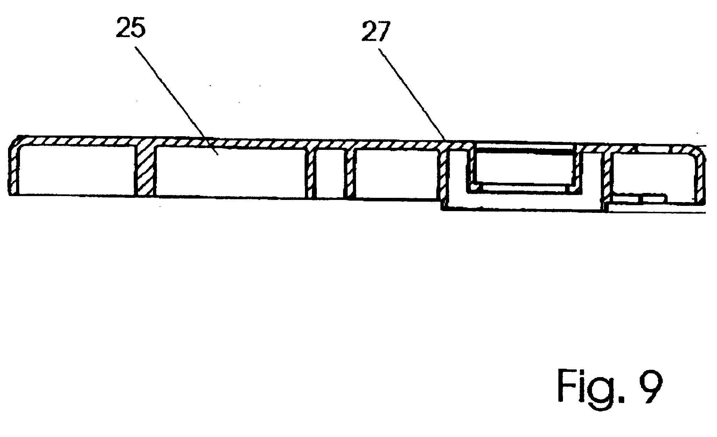

- Fig. 9: einen Schnitt entlang der Linie IX-IX in Fig. 8,

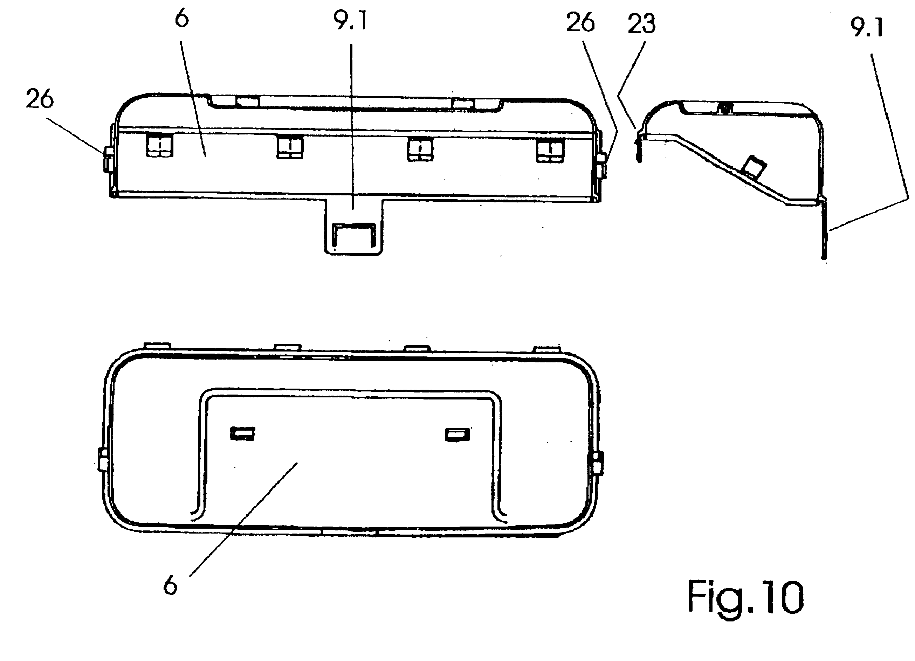

- Fig. 10: eine Vorder-, eine Seitenansicht und eine Draufsicht auf einen Deckel der zweiten Ausführungsform,

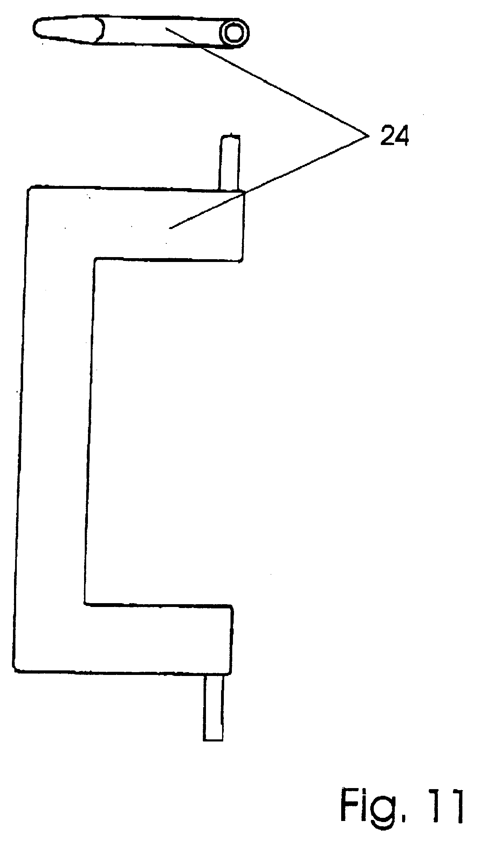

- Fig. 11: eine Vorder- und eine Seitenansicht eines Handgriffes der zweiten Ausführungsform und

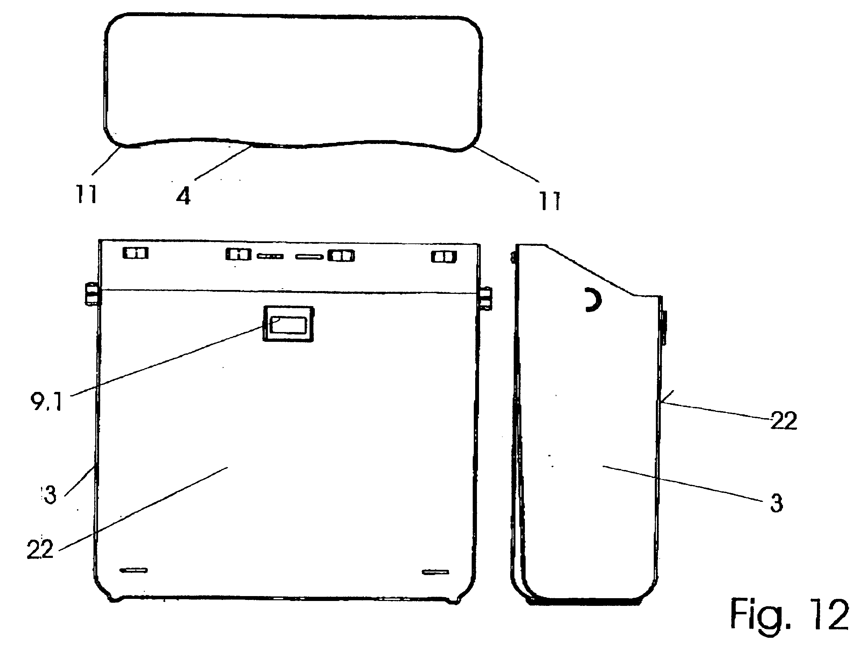

- Fig. 12: eine Vorder-, eine Seitenansicht und eine Draufsicht auf einen Grundkörper der zweiten Ausführungsform.

In der ersten Ausführungsform ist der als Schulranzen ausgeführte Tragebehälter 1 aus Leichtmetall oder Kunststoff gefertigt. Er besteht aus einem mit einer Hülle 2 überzogenen Grundkörper 3. Dieser ist stabil genug, um als Kindersitz ein Gewicht von bis zu 36 kg auszuhalten. Er ist so geformt, daß die bei der Verwendung als Schulranzen dem Rücken zugewandte Außenseite als Sitzfläche 4 für eine Verwendung als Autokindersitz dienen kann.

An der dem Rücken abgewandten Seite befinden sich Rückstrahler 5.

Ein Deckel 6 besteht aus einem Leichtmetall- oder Kunststoffgrundrahmen 7, auf dem eine etwas überstehende flexible Platte 8, die als Kantenschutz dient, befestigt ist. Sowohl der Rahmen 7 als auch die flexible Platte 8 sind ebenfalls mit einer Hülle 2 überzogen. An der Seite befinden sich Verschlußelemente 9.

Der Deckel 6 ist so am Grundkörper 3 befestigt, daß er aufgeklappt werden kann und sich beim Schließen so in den Grundkörper 3 einpaßt, daß der Rahmen 7 des Deckels 6 und Grundkörper 3 ein stabiles System bilden.

Bei einer Verwendung als Autokindersitz wird der als Schulranzen ausgebildete Tragebehälter 1 so auf den Autositz gelegt, daß die Sitzfläche, die bei der Verwendung als Schulranzen dem Rücken zugewandt ist, nach oben zeigt.

Der Deckel 6 zeigt in Fahrtrichtung nach vorn. Mit dem Tragebehälter 1 als Unterlage kann das nunmehr erhöht sitzende Kind mit dem Dreipunktgurt 10 angeschnallt werden. Dabei wird die gleiche Funktion realisiert, wie bei einem herkömmlichen Autokindersitz.

Die strapazierfähige Hülle 2 ist über die gepolsterten Kanten des Grundkörpers 3 nach innen geklappt und dort mit Klettband 11 befestigt.

An der gepolsterten Sitzfläche 4 des Tragebehälters 1 sind seitlich Randwülste 11 angebracht, die bei der Verwendung als Autokindersitz ein Verrutschen des Kindes verhindern und bei der Verwendung als Schulranzen einen guten Tragekomfort gewährleisten.

Die Träger 12 setzen sich aus einem Schulterpolster 13 und einem Tragriemen 14 mit einer daran befestigten Lasche 15 und einem Klemmelement 16 zusammen. Das Schulterpolster 13 und die Tragriemen 14 sind so miteinander verbunden, daß ein schnelles Öffnen und flexibles Einstellen der Träger 12 möglich ist.

Nach Öffnen des Tragriemens 14 und Einstellung auf die größtmögliche Länge kann das Kind durch die über Kreuz gelegten Tragriemen 14 auf dem Sitz, und zwar über den Oberschenkeln, fixiert werden kann;

Weiterhin ist eine abnehmbare Vortasche 17 vorgesehen, die bei einer Verwendung als Autokindersitz nach vorne klappt, um eine stabile Auflage auf dem Autositz zu ermöglichen.

Unterschiede in der Größe des Kindes können durch eine unterschiedliche Dicke der Aufpolsterung auf der Sitzfläche 4 ausgeglichen werden.

An den Seiten befinden sich nach unten schwenkbare Arme, die als Bügel 18 ausgebildet sind. Diese sind mit einer Schraube 19 an dem Grundkörper 3 befestigt. Bei Verwendung als Schulranzen werden die Bügel 18 in einer Tasche 20, die mit einem Klettverschluß 21 versehen ist, untergebracht. Bei einer Verwendung als Autokindersitz können die Bügel 18 aus der Tasche 20 hochgeklappt werden, so daß der Auto-Dreipunktgurt 10 durch die Bügel 18 an dem als Autokindersitz dienenden Tragebehälter 1 fixiert werden kann.

Es ist auch möglich, daß bei einer Verwendung als Autokindersitz dieser nicht mit den Trageriemen 14 an den Oberschenkeln des Kindes befestigt wird, sondern die Trageriemen 14 statt dessen mit Klettband an den Seiten fixiert werden.

In der zweiten Ausführungsform ist der Tragebehälter ebenfalls als Schulranzen ausgebildet.

Dieser Tragebehälter 1 hat eine im wesentlichen quaderförmige Grundform. Es sind jedoch alle anderen geeigneten Formen, z.B. in Form eines Ovals, ebenfalls denkbar.

Dieser Tragebehälter 1 ist ebenfalls auf den Sitz eines Kraftfahrzeuges derart auflegbar, daß die als Sitzfläche 4 ausgebildete breite Außenfläche die Sitzfläche eines Autokindersitzes und der Grundkörper 3 den Korpus des Autokindersitzes bildet.

Der Deckel 6 ist derart auszubilden, daß er im geschlossenen Zustand mit dem Grundkörper 3 einen die Stabilität des Grundkörpers 3 erhöhenden Formschluß bildet.

An der breiten Außenfläche 22, die der als Sitzfläche 4 ausgebildeten breiten Außenfläche gegenüberliegt, ist ein erstes Verschlußelement 9.1 anzuordnen, in das ein zweites Verschlußelement 9.2 an dem Deckel 6 eingreifbar ist.

Der Deckel 6 ist mit dem Grundkörper 3 über ein Scharnier 23 verbunden. Der Grundkörper 3 ist mit einer Hülle überzogen.

An der als Sitzfläche 4 ausgestalteten breiten Außenseite sind Randwülste 11 vorgesehen. Dabei ist die als Sitzfläche 4 ausgebildete breite Außenseite gepolstert.

An dem Tragebehälter 1 sind Träger 12 derart angeordnet, daß der Tragebehälter 1 auf dem Rücken tragbar ist, wobei die als Sitzfläche 4 ausgebildete Außenfläche am Rücken der tragenden Person anliegt.

An dem Deckel 6 ist ein Handgriff 24 einklappbar angelenkt. Auf der Deckelinnenseite ist ein nicht näher dargestelltes Brotzeitfach angeordnet.

Ebenfalls sind bei dieser Ausführung auch als Rückstrahler 5 ausgebildete reflektierende Flächen angeordnet.

An den die Tiefe des Tragbehälters 1 bildenden schmalen Außenseiten sind Arme 25 angelenkt, die bei der Verwendung als Autokindersitz in Richtung zur Sitzfläche 4 so schwenkbar sind, daß sie aus der Ebene der Sitzfläche 4 herausragen. Sie befinden sich im ausgeschwenkten Zustand an der der Rückenlehne zugewandten Seite des als Autokindersitz wirkenden Tragebehälters 1.

Zur Aufnahme des Armes 25 ist der Grundkörper 3 an den Drehpunkten mit einem Zapfen 26 versehen, auf den der Arm 25 an seinem Drehpunkt eingeclipst ist.

Um seinen Drehpunkt herum weist der Arm 25 einen tellerförmigen Bereich 27 auf, der eine erste nach außen gekröpfte und in der Drehrichtung beim Herausschwenken des Armes geöffnete Nase 28 als das erste und eine zweite in der Gegenrichtung geöffnete Nase 29 als das dritte Zuhaltemittel aufweist.

An dem Deckel 6 ist eine Tasche 30 als zweites und zugleich viertes Zuhaltemittel vorgesehen, in die wahlweise die beiden Nasen 28 und 29, den Deckel arretierend, eingreifen.

Der Arm 25 selbst ist in der von dem befestigungsseitigen Ende der schmalen Außenseite wegweisenden Richtung von der durch seinen Drehpunkt laufenden Radiuslinie abgewinkelt.

### Bezugszeichenliste

- 1: Tragebehälter
- 2: Hülle
- 3: Grundkörper
- 4: Sitzfläche
- 5: Rückstrahler
- 6: Deckel
- 7: Rahmen
- 8: flexible Platte
- 9.1: Verschlußelement
- 9.2: Verschlußelement
- 10: Dreipunktgurt
- 11: Randwulst/-wülste
- 12: Träger
- 13: Schulterpolster
- 14: Tragriemen
- 15: Lasche
- 16: Klemmelement
- 17: Vortasche
- 18: Bügel
- 19: Schraube
- 20: Tasche
- 21: Klettverschluß
- 22: Außenfläche
- 23: Scharnier
- 24: Handgriff
- 25: Arm
- 26: Zapfen
- 27: tellerförmiger Bereich
- 28: erste Nase
- 29: zweite Nase
- 30: Tasche

## Patentansprüche

1. Tragebehälter mit einem Grundkörper, der im Verhältnis zu seiner Breite oder seiner Höhe eine geringere Tiefe aufweist und der mit einem Deckel verschließbar ist, wobei eine Außenfläche des Tragebehälters als Sitzfläche eines Kindersitzes ausgebildet ist, **dadurch gekennzeichnet,**
daß eine an einer Breitseite des Grundkörpers (3) anliegende breite Außenfläche als Sitzfläche (4) eines Autokindersitzes ausgebildet ist,
daß der Grundkörper (3) eine Formstabilität bis zu einer auf die Sitzfläche (4) einwirkenden Gewichtskraft von mindestens 360 N aufweist,
daß der Grundkörper (3) bei Auflegen auf den Sitz eines Kraftfahrzeuges den Korpus des Autokindersitzes bildet, und
daß an den die Tiefe des Tragebehälters (1) bildenden schmalen Außenseiten ein Rutschen des Tragebehälters (1) in Fahrtrichtung verhindernde Arme (25) angelenkt sind.

2. Tragebehälter nach Anspruch 1, **dadurch gekennzeichnet,** daß der Deckel (6) derart ausgebildet ist, daß er im geschlossenen Zustand mit dem Grundkörper (3) einen die Stabilität des Grundkörpers (3) erhöhenden Formschluß bildet.

3. Tragebehälter nach Anspruch 1 oder 2, **dadurch gekennzeichnet,** daß an der breiten Außenfläche (22), die der als Sitzfläche (4) ausgebildeten breiten Außenfläche gegenüberliegt, ein erstes Verschlußelement (9.1) angeordnet ist, in das ein zweites Verschlußelement (9.2) an dem Deckel (6) eingreifbar ist.

4. Tragebehälter nach einem der Ansprüche 1 bis 3, **dadurch gekennzeichnet,** daß der Deckel (6) mit dem Grundkörper (3) scharnierartig verbunden ist.

5. Tragebehälter nach einem der Ansprüche 1 bis 4, **dadurch gekennzeichnet,** daß der Grundkörper (3) mit einer Hülle (2) überzogen ist.

6. Tragebehälter nach einem der Ansprüche 1 bis 5, **dadurch gekennzeichnet,** daß der Grundkörper (3) in eine Hülle einsetzbar ist.

7. Tragebehälter nach Anspruch 6, **dadurch gekennzeichnet,** daß die Hülle mit dem Grundkörper (3) verbindbar ist, wobei nur die Hülle die nach außen wirkenden Funktionen des Grundkörpers übernimmt.

8. Tragebehälter nach einem der Ansprüche 1 bis 7, **dadurch gekennzeichnet,** daß an der als Sitzfläche (4) ausgestalteten breiten Außenseite Randwülste (11) vorgesehen sind.

9. Tragebehälter nach einem der Ansprüche 1 bis 8, **dadurch gekennzeichnet,** daß die als Sitzfläche (4) ausgebildete breite Außenseite gepolstert ist.

10. Tragebehälter nach einem der Ansprüche 1 bis 9, **dadurch gekennzeichnet,** daß die als Sitzfläche (4) ausgebildete breite Außenfläche mit einer separaten Polsterfläche verbindbar ist.

11. Tragebehälter nach Anspruch 10, **dadurch gekennzeichnet,** daß die als Sitzfläche (4) ausgebildete breite Außenfläche mit Klettverschlußflächen versehen ist, die mit korrespondierenden Klettverschlußflächen an der Rückseite der separaten Polsterfläche verbindbar sind.

12. Tragebehälter nach einem der Ansprüche 1 bis 11, **dadurch gekennzeichnet,** daß an dem Tragebehälter (1) Träger (12) derart angeordnet sind, daß der Tragebehälter (1) auf dem Rücken tragbar ist, wobei die als Sitzfläche (4) ausgebildete Außenfläche am Rücken der tragenden Person anliegt.

13. Tragebehälter nach Anspruch 12, **dadurch gekennzeichnet,** daß sich die Träger (12) aus einem Schulterpolster (13) und einem Tragriemen (14) mit einer daran befestigten Lasche (15) und einem Klemmelement (16) zusammensetzen und Schulterpolster (13) und Tragriemen (14) so miteinander verbunden sind, daß ein schnelles Öffnen und flexibles Einstellen der Träger (12) möglich ist.

14. Tragebehälter nach einem der Ansprüche 1 bis 13, **dadurch gekennzeichnet,** daß an dem Deckel (6) ein Handgriff (24) einklappbar angelenkt ist.

15. Tragebehälter nach einem der Ansprüche 1 bis 14, **dadurch gekennzeichnet,** daß auf der der Sitzfläche (4) gegenüberliegenden breiten Außenfläche und/oder an den die Tiefe des Tragbehälters (1) bildenden schmalen Außenseiten reflektierende Flächen (5) angeordnet sind.

16. Tragebehälter nach einem der Ansprüche 1 bis 15, **dadurch gekennzeichnet,** daß die Arme (25) bei der Verwendung als Autokindersitz in Richtung zur Sitzfläche (4) so schwenkbar sind, daß sie aus der Ebene der Sitzfläche (4) herausragen, und in der Nähe des deckel- oder bodenseitigen Endes der Außenseiten derart angelenkt sind, daß sie sich bei Verwendung als Autokindersitz an der der Rückenlehne des Sitzes des Kraftfahrzeuges zugewandten Seite befinden.

17. Tragebehälter nach Anspruch 16, **dadurch gekennzeichnet,** daß die Arme (25) als Bügel (18) ausgebildet sind, die bei der Verwendung als Autokindersitz den Beckengurt des an dem Sitz des Kraftfahrzeuges vorgesehenen Sicherheitsgurtes (10) umgreifen.

18. Tragebehälter nach Anspruch 16 oder 17, **dadurch gekennzeichnet,** daß an den schmalen Außenseiten Taschen (20) zur Aufnahme der eingeschwenkten Arme (18, 25) bei Verwendung als Tragebehälter vorgesehen sind.

19. Tragebehälter nach einem der Ansprüche 16 bis 18, **dadurch gekennzeichnet,** daß an dem Arm (25) ein erstes Zuhaltemittel (28) vorgesehen ist, das in ein zweites Zuhaltemittel (30) an dem Deckel (6) in der aus der Ebene der Sitzfläche (4) herausragenden Position des Armes (25), den Deckel (4) arretierend, eingreift.

20. Tragebehälter nach einem der Ansprüche 16 bis 19, **dadurch gekennzeichnet,** daß an dem Arm (25) ein drittes Zuhaltemittel (29) vorgesehen ist, das in ein viertes Zuhaltemittel (30) an dem Deckel (6) in der auf die schmale Außenseite eingeschwenkten Position des Armes (25), den Deckel (6) arretierend, eingreift.

21. Tragebehälter nach einem der Ansprüche 16 bis 20, **dadurch gekennzeichnet,** daß der Grundkörper (3) an den Drehpunkten mit einem Zapfen (26) oder einer Öffnung versehen ist, auf den oder in die der Arm (25) an seinem Drehpunkt eingeclipst ist.

22. Tragebehälter nach einem der Ansprüche 16 bis 21, **dadurch gekennzeichnet,** daß der Arm (25) um seinen Drehpunkt herum einen tellerförmigen Bereich (27) aufweist, der das erste (28) und/oder das dritte (29) Zuhaltemittel aufnimmt.

23. Tragebehälter nach einem der Ansprüche 16 bis 22, **dadurch gekennzeichnet,** daß der Arm (25) in der von dem befestigungsseitigen Ende der schmalen Außenseite wegweisenden Richtung von der durch seinen Drehpunkt laufenden Radiuslinie abgewinkelt ist.

## Claims

1. Combined carrying case and seat with a base body displaying a depth smaller than its width or height and closable by means of a lid, where one outer surface of the combined carrying case and seat is designed as the seating surface of a child's seat, **characterised**
in that one broad outer surface, located on the broad side of the base body (3), is designed as the seating surface (4) of a child's car seat,
in that the base body (3) displays dimensional stability up to a weight of at least 360 N acting on the seating surface (4),
in that the base body (3) forms the body of the child's car seat when placed on the seat of a motor vehicle, and
in that arms (25), attached in pivoting fashion to the narrow outer sides forming the depth of the combined carrying case and seat (1), prevent the combined carrying case and seat (1) from slipping in the direction of travel.

2. Combined carrying case and seat as per Claim 1, **characterised in that** the lid (6) is designed in such a way that, when closed, it forms a positive fit with the base body (3), enhancing the stability of the base body (3).

3. Combined carrying case and seat as per Claim 1 or 2, **characterised in that** a first locking element (9.1), which can be engaged in a second locking element (9.2) on the lid (6), is located on the broad outer surface (22) opposite to the broad outer surface designed as the seating surface (4).

4. Combined carrying case and seat as per Claims 1 to 3, **characterised in that** the lid (6) is connected to the base body (3) in hinge-like fashion.

5. Combined carrying case and seat as per one of the Claims 1 to 4, **characterised in that** the base body (3) is covered by a sleeve (2).

6. Combined carrying case and seat as per one of the Claims 1 to 5, **characterised in that** the base body (3) can be inserted into a sleeve.

7. Combined carrying case and seat as per Claim 6, **characterised in that** the sleeve can be connected to the base body (3), with only the sleeve assuming the outward-acting functions of the base body.

8. Combined carrying case and seat as per one of the Claims 1 to 7, **characterised in that** the broad outer side designed as the seating surface (4) is provided with edge beads (11).

9. Combined carrying case and seat as per one of the Claims 1 to 8, **characterised in that** the broad outer surface designed as the seating surface (4) is padded.

10. Combined carrying case and seat as per one of the Claims 1 to 9, **characterised in that** the broad outer surface designed as the seating surface (4) can be connected to a separate padded surface.

11. Combined carrying case and seat as per Claim 10, **characterised in that** the broad surface designed as the seating surface (4) is provided with Velcro fasteners which can be connected to corresponding Velcro fasteners on the rear of the separate padded surface.

12. Combined carrying case and seat as per one of the Claims 1 to 11, **characterised in that** straps (12) are located on the combined carrying case and seat (1) in such a way that the combined carrying case and seat can be carried on the back, with the outer surface, designed as the seating surface (4), lying against the back of the person carrying it.

13. Combined carrying case and seat as per Claim 12, **characterised in that** the straps (12) consist of a shoulder pad (13) and a carrying strap (14) with a tab (15) and a clamping element (16) fastened to it, and that the shoulder pad (13) and the carrying strap (14) are connected to each other in such a way that the straps (12) can be quickly opened and flexibly adjusted.

14. Combined carrying case and seat as per one of the Claims 1 to 13, **characterised in that** a handle (24) is fixed to the lid (6) in fold-away fashion.

15. Combined carrying case and seat as per one of the Claims 1 to 14, **characterised in that** reflective surfaces (5) are located on the broad outer surface opposite the seating surface (4) and/or on the narrow outer sides forming the depth of the combined carrying case and seat (1).

16. Combined carrying case and seat as per one of the Claims 1 to 15, **characterised in that,** when used as a child's car seat, the arms (25) can be pivoted in the direction of the seating surface (4) in such a way that they project beyond the plane of the seating surface (4) and are connected in the vicinity of the lid or bottom end of the outer sides in such a way that, when used as a child's car seat, they are positioned on the side facing the back rest of the seat of the motor vehicle.

17. Combined carrying case and seat as per Claim 16, **characterised in that** the arms (25) are designed as brackets (18) which, when used as a child's car seat, reach around the pelvic belt of the safety belt (10) provided on the seat of the motor vehicle,

18. Combined carrying case and seat as per Claim 16 or 17, **characterised in that** pockets (20) are provided on the narrow outer sides to accommodate the arms (18, 25) when swung in for use as a carrying case.

19. Combined carrying case and seat as per one of the Claims 16 to 18, **characterised in that** a first locking device (28) is provided on the arm (25), engaging a second locking device (30) on the lid (6) when the arm (25) is in its position projecting from the plane of the seating surface (4), thus locking the lid (6) in place.

20. Combined carrying case and seat as per one of the Claims 16 to 19, **characterised in that** a third locking device (29) is provided on the arm (25), engaging a fourth locking device (30) on the lid (6) when the arm (25) is in its position swung in against the narrow outer side, thus locking the lid (6).

21. Combined carrying case and seat as per one of the Claims 16 to 20, **characterised in that** the pivots of the base body (3) are provided with a peg (26) or an opening, onto or into which the arm (25) is clipped at its pivot.

22. Combined carrying case and seat as per one of the Claims 16 to 21, **characterised in that** the arm (25) displays a disk-shaped area (27) around its pivot to accommodate the first locking device (28) and/or the third locking device (29).

23. Combined carrying case and seat as per one of the Claims 16 to 22, **characterised in that,** in the direction pointing away from the fastening end of the narrow outer side, the arm (25) is angled from the radius line running through its pivot.

## Revendications

1. Conteneur portatif avec un corps de base qui, par rapport à sa largeur ou à sa hauteur, présente une profondeur moindre et qui peut être fermé au moyen d'un couvercle, une surface extérieure du conteneur portatif étant conçue comme surface de siège d'un siège pour enfants, conteneur portatif caractérisé en ce
qu'une large surface extérieure adhérant à une face large du corps de base (3) est conçue comme surface de siège (4) d'un siège d'automobile pour enfants,
que le corps de base (3) présente une stabilité de forme jusqu'à une force de poids agissant sur la surface de siège (4) d'au moins 360 N,
que le corps de base (3) posé sur le siège d'un véhicule automobile forme le corps d'un siège d'automobilöe pour enfants, et
qu'aux faces extérieures étroites constituant la profondeur du conteneur portatif (1) sont articulés des bras (25) empêchant un glissement du conteneur portatif (1) dans le sens de déplacement.

2. Conteneur portatif selon revendication 1, caractérisé en ce que le couvercle (6) est conçu de façon qu'à l'état fermé, il forme avec le corps de base (3) une union de forme augmentant la stabilité du corps de base (3).

3. Conteneur portatif selon revendication 1 ou 2, caractérisé en ce qu'à la large surface extérieure (22) opposée à la large surface extérieure conçue comme surface de siège (4) est disposé un premier élément de fermeture (9.1) dans lequel peut s'engager un deuxième élément de fermeture (9.2) au couvercle (6).

4. Conteneur portatif selon une des revendications 1 à 3, caractérisé en ce que le couvercle (6) est uni à la façon d'une charnière au corps de base (3).

5. Conteneur portatif selon une des revendications 1 à 4, caractérisé en ce que le corps de base (3) est recouvert d'une enveloppe (2).

6. Conteneur portatif selon une des revendications 1 à 5, caractérisé en ce que le corps de base (3) peut être mis dans une enveloppe.

7. Conteneur portatif selon revendication 6, caractérisé en ce que l'enveloppe peut être unie au corps de base (3), l'enveloppe seule assurant dans ce cas les fonctions agissant vers l'extérieur.

8. Conteneur portatif selon une des revendications 1 à 7, caractérisé en ce qu'à la large face extérieure conçue comme surface de siège (4) sont prévus des renflements de bordure (11).

9. Conteneur portatif selon une des revendications 1 à 8, caractérisé en ce que la large face extérieure conçue comme surface de siège (4) est rembourrée.

10. Conteneur portatif selon une des revendications 1 à 9, caractérisé en ce que la large face extérieure conçue comme surface de siège (4) peut être combinée avec une surface rembourrée séparée.

11. Conteneur portatif selon revendication 10, caractérisé en ce que la large face extérieure conçue comme surface de siège (4) est pourvue de surfaces de fermeture velcro pouvant être unies à des surfaces de fermeture velcro correspondantes au dos de la surface rembourrée séparée.

12. Conteneur portatif selon une des revendication 1 à 11, caractérisé en ce qu'au conteneur portatif (1) sont disposées des bretelles (12) de manière à permettre de porter au dos le conteneur portatif (1), la face extérieure conçue comme surface de siège (4) s'appliquant au dos de la personne portante.

13. Conteneur portatif selon revendication 12, caractérisé en ce que les bretelles (12) se composent d'un rembourrement d'épaule (13) et d'une sangle (14) à laquelle est fixée une languette (15) et d'un élément de blocage (16), et que le rembourrement d'épaule (13) et la sangle (14) sont unis de façon à permettre une ouverture rapide et un réglage flexible des bretelles (12).

14. Conteneur portatif selon une des revendications 1 à 13, caractérisé en ce qu'au couvercle (6) est articulée une poignée (24) escamotable.

15. Conteneur portatif selon une des revendications 1 à 14, caractérisé en ce qu'à la large face extérieure opposée à la surface de siège (4) et/ou aux faces extérieures étroites constituant la profondeur du conteneur portatif (1) sont disposées des surfaces réfléchissantes (5).

16. Conteneur portatif selon une des revendications 1 à 15, caractérisé en ce que les bras (25), si le conteneur portatif est utilisé comme siège d'automobile pour enfants, peuvent être pivotés en direction de la surface de siège (4) de manière qu'ils débordent le plan de la surface de siège (4), et qu'ils sont articulés à proximité de l'extrémité côté couvercle ou côté fond des faces extérieures de façon qu'ils se trouvent, si le conteneur portatif est utilisé comme siège d'automobile pour enfants, du côté orienté vers le dossier du siège du véhicule automobile.

17. Conteneur portatif selon revendication 16, caractérisé en ce que les bras (25) sont conçus comme étriers (18) qui, si le conteneur portatif est utilisé comme siège d'automobile pour enfants, embrassent la ceinture de bassin de la ceinture de sécurité (10) prévue au siège du véhicule automobile.

18. Conteneur portatif selon revendication 16 ou 17, caractérisé en ce que qu'aux faces extérieures étroites sont prévues des poches (20) pour loger les bras (18, 25) pivotés vers l'arrière, si le conteneur portatif est utilisé comme tel.

19. Conteneur portatif selon une des revendications 16 à 18, caractérisé en ce qu'au bras (25) est prévu un premier moyen d'arrêt (28) qui s'engage dans un deuxième moyen d'arrêt (30) au couvercle (6), à la position débordant le plan de la surface de siège (4) du bras (25), en arrêtant ainsi le couvercle (6).

20. Conteneur portatif selon une des revendications 16 à 19, caractérisé en ce qu'au bras (25) est prévu un troisième moyen d'arrêt (29) qui s'engage dans un quatrième moyen d'arrêt (30) au couvercle (6), à la position pivotée sur la face extérieure étroite du bras (25), en arrêtant ainsi le couvercle (6).

21. Conteneur portatif selon une des revendications 16 à 20, caractérisé en ce que le corps de base (3) est pourvu, aux centres de rotation, d'un pivot (26) ou d'une ouverture sur lequel ou dans laquelle le bras (25) est engagé à son centre de rotation.

22. Conteneur portatif selon une des revendications 16 à 21, caractérisé en ce que le bras (25) présente, autour de son centre de rotation, une zone en forme d'assiette (27) supportant le premier moyen d'arrêt (28) et/ou le troisième moyen d'arrêt (29).

23. Conteneur portatif selon une des revendications 16 à 22, caractérisé en ce que le bras (25), dans la direction s'éloignant de l'extrémité côté fixation de la face extérieure étroite, est coudé par rapport à la ligne de rayon passant par son centre de rotation.
